# EUROPEAN PATENT SPECIFICATION

(11) **EP 2 151 354 B1**
(45) Date of publication and mention of the grant of the patent: **23.02.2011**
(21) Application number: 09162807.3
(22) Date of filing: 16.06.2009
(51) Int. Cl.: B60K 1/04, H01M 10/50

(54) **Connecting structure for vehicle interior part**
Verbindungsstruktur für ein Fahrzeuginnenteil
Structure de connexion pour pièce intérieure de véhicule

(30) Priority: 06.08.2008 JP 2008203117
(43) Date of publication of application: 10.02.2010
(73) Proprietor: Toyoda Iron Works Co., Ltd., Toyota-shi, Aichi-ken 471-8507 (JP)
(72) Inventor: Hirose, Masamori, Toyota-shi Aichi 471-8507 (JP)
(74) Representative: TBK-Patent

(56) References cited:
- DE-A1- 2 904 667
- DE-A1-102005 036 910
- US-A1- 2003 003 259

## Description

### FIELD OF THE INVENTION

This invention relates to a connecting structure for a vehicle interior part. More particularly, it relates to the connecting structure in which an assembling work can be performed easily and immediately, and which is excellent in design freedom on a configuration design, upon connecting two members in abutting engagement

### DESCRIPTION OF THE RELATED ART

A connecting structure for a vehicle interior part has been employed in a vehicle door trim or the like. This connecting structure includes a plate-like sidewall section provided on a first member, and a plate-like upright section provided on a second member, both of which are abutted to each other so that their front surfaces have coplanar relation, that is, they are flushed with each other to be unitarily connected. Patent Document 1 (Japanese Patent Publication No. 11-139231) discloses a vehicle door trim of such an example. As shown in Fig. 4, an outer circumferential flange 102 unitarily attached to a door panel 100 and serving as a second member integrally has an upright section 104, and a trim body 110 serving as a first member integrally has a sidewall section 112 (an extending portion in Patent Document 1).

The upright section 104 has, on an abutting portion thereof, a stepped portion 106 obliquely slanted denting toward a rear surface, to which a latch portion 108 is continuously formed. The sidewall section 112 has, on a rear surface thereof, a latch pin 114 standing upright, penetrating a through-hole formed in the latch portion 108, so as to protrude in a direction approximately perpendicular to the rear surface. Caulking a distal end of the latch pin 114 by ultrasonic caulking results in a unitary connection of the upright section 104 and the sidewall 112 in non-separating manner.

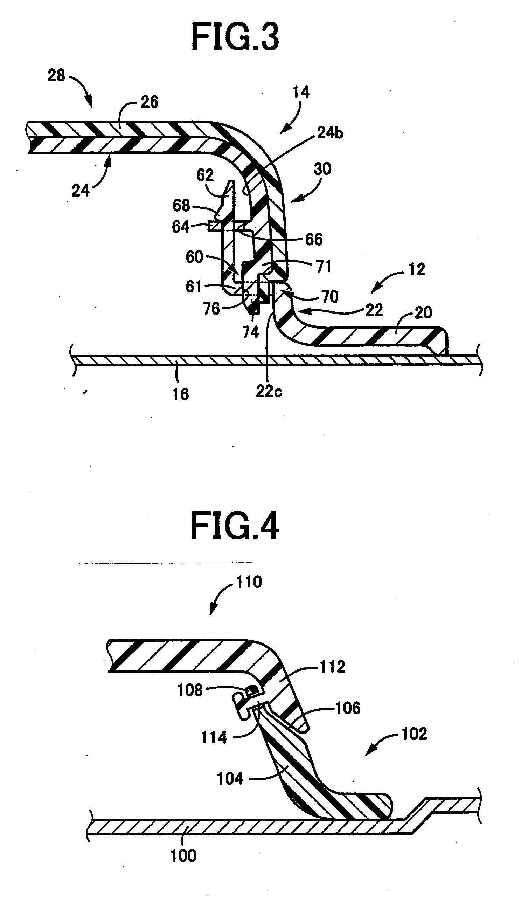

However, in such conventional connecting structure, the latch pin 114 stands upright in the direction approximately perpendicular to the sidewall section 112. Therefore, during the assembling of the door panel 100 and the trim body 110, the sidewall section 112 needs to be dislocated to a side area (rightward as viewed in Fig. 4) by a length i.e., height of the latch pin 114, and subsequently to move closer to the upright section 104 for causing the latch pin 114 to be inserted to the through-hole of the latch portion 108. In addition, a welding hone needs to be inclined for caulking at an angle with respect to a direction perpendicular to a general flat plane of the trim body 110, which unnecessarily results in unfavorable assembling work.

Further, for instance, as shown in Fig. 4, it is conceived that a left-hand end portion of the trim body 110 is also formed with the sidewall section 112 and is connected to the common outer circumferential flange 102. The sidewall sections 112 placed on both sides are formed with the latch pins 114 available to be fitted to cutout holes formed in the latch portions 108 so as to open to the trim body 110. In this case, however, assembling directions and caulking directions differ from each other between the left-hand portion and the right-hand portion by a value of approximately 90[deg.], which results in degradation in positioning ability of the trim body 110 with respect to the outer circumferential flange body 102. This leads to degradation in an assembling workability and a limited design freedom in a configuration design or the like.
DE 10 2005 036910 A1 discloses a generic device which has wall sections and a guide, where a positive connection that produces a prestress is provided in a connection area between a door interior unlocking device and a trim strip. Projections are provided between the door interior unlocking device and the trim strip, where a housing of the unlocking device comprises a flange section. The wall sections are formed at the housing of the unlocking device.

### SUMMARY OF THE INVENTION

The present invention has been completed with the above view in mind, and has an object to provide a connecting structure for a vehicle interior part which allows two members to abut to each other to be connected with improved assembling workability and increased design freedom in a configuration design or the like.

For achieving the above object, a connecting structure for a vehicle interior part according to claim 1 is provided. Further developments are defined in the dependent claims. A first aspect of the invention relates to a connecting structure for a vehicle interior part to allow a plate-like sidewall section disposed on at least one end of a first member and a plate-like upright section disposed on at least one end of a second member to be brought into abutted engagement such that a surface of the plate-like sidewall section and a surface of plate-like upright section are approximately coplanar to be unitarily connected to each other. The connecting structure for vehicle interior part is characterized by that (i) one member of the first member and the second member has, on an abutting portion thereof, a stepped section dented to a rear surface side, and a latch protrusion contiguous with the stepped section and protruding in an abutting direction during the abutting engagement toward the other member of the first member and the second member; and (ii) the other member of the first member and the second member has, on a rear surface side thereof, a latch portion with which the latch protrusion elastically engages, when the one member and the other member are moved closer relative to each other in the abutting direction, to unitarily connect the one member and the other member with preventing the latch protrusion from coming out.

A second aspect of the invention is featured by that, in the first aspect, (i) the stepped section has a bent shape formed in a cranked configuration in a cross section, and includes a stepped portion bent toward a rear surface side, and an extending portion extending from a distal end of the stepped portion toward the other member in the abutting direction, the other member being brought into abutment with the stepped portion, and the extending portion having a distal end formed with the latch protrusion; and (ii) the one member formed with the stepped section has a surface to which a skin material is fixedly attached, and the skin material has an end portion i.e., an end extending along the stepped section to reach a rear surface side of the other member.

A third aspect of the invention is featured by that, in the second aspect, (i) the other member has, on the rear surface thereof, a guide section having an L-shape in cross section to form a positioning recess to allow insertion of the extending portion, the guide section having, on an area forming a bottom portion of the positioning recess, a latch hole as the latch portion to allow insertion of the latch protrusion; and (ii) the latch protrusion has a retaining convex portion passing through the latch hole due to an elastic deformation of the latch protrusion, the retaining convex portion being elastically returned to engage with a circumferential edge of the latch hole for preventing the latch protrusion from coming out.

A fourth aspect of the invention is featured by that, in the first aspect, (i) the other member has, on an abutting portion thereof, a second stepped section bent toward the rear surface side of the other member, and a positioning protrusion contiguous with the second stepped section and protruding in a direction opposite to the latch protrusion; (ii) and the one member has, on the stepped section thereof, an engagement hole with which the positioning protrusion engages when the one member is moved closer relative to the other member in the abutting direction.

In the first aspect of the invention, one member of the first member and the second member has, on the abutting portion thereof, the stepped section, and the latch protrusion contiguous with the stepped section and protruding in the abutting direction. In addition, the other member of the first member and the second member has, on the rear surface side thereof, the latch portion with which the latch protrusion elastically engages, when the one member and the other member are moved closer relative to each other in the abutting direction with preventing the latch protrusion from coming out. Therefore, upon assembling the first member and the second member, both of them are sufficiently moved closer relative to each other, enabling the assembling work to be easily and immediately performed.
Further, even if the first member and the second member have, at the both end portions in a fore and aft direction or both end portions in a vertical direction, sidewall sections and upright sections, the both end portions can be unitarily connected to each other by the latch protrusions and the latch portions. This results in the easy and immediate assembling work, and the increased design freedom on a configuration design or the like without worsening a positioning capability.

In the second aspect of the invention, the stepped section has the bent shape formed in the cranked configuration in the cross section, and includes the stepped portion bent toward the rear surface side, and the extending portion extending from the distal end of the stepped portion in the abutting direction. The skin material fixedly attached to the one member has the end portion extending along the stepped section to reach the rear surface side.
Therefore, the end portion does not need to be subjected to rolling treatment or edge-tucking treatment, rendering the interior part having a high design character like a streamer at lower cost. The design like streamer is described in, for instance, Japanese Patent Publication No. 2000-343947.

In the third aspect, the other member has, on the rear surface thereof, the guide section to form the positioning recess to allow insertion of the extending portion Thus, the first member and the second member are assembled with each other with high positioning precision so that the side wall section and the upright section are brought into the abutting engagement. In addition, the latch protrusion is caused to pass through the latch hole provided on the guide portion, and the retaining convex portion provided on the latch protrusion is elastically returned to engage with the circumferential edge of the latch hole. This favorably prevents the latch protrusion from coming out from the latch hole, causing the first member and the second member to be unitarily assembled to each other.

In the fourth aspect, the other member is provided, on the abutting portion thereof, the second stepped section, and the positioning protrusion contiguous with the second stepped section. Engaging the positioning protrusion with the engagement hole formed in the stepped section of the one member allows the latch protrusion and the latch portion to engage with each other. At the same time, the first member and the second member can be assembled with increased positional precision between the sidewall section of the first member and the upright section of the second member.

### DISCLOSURE OF INVENTION

The connecting structure for the vehicle interior part of the present invention, is suitably applied to a connecting structure for unitarily assembling a predetermined ornament member (first member) to a door trim body (second member) having an outer circumferential flange of, for instance, a vehicle door trim. However, the present invention can be applied to a connecting structure of various vehicle interior parts like situations, upon assembling a member except for the ornament member or the like onto the door trim, or upon assembling an ornament member or the like onto a member except for the door trim such as an instrument panel or the like.

The one member, on which the latch protrusion i.e. latching protrusion is formed, may be the first member or the second member. If the latch protrusion is formed on the first member, the second member as the other member is formed with the latch portion i.e. latched portion. In contrast, if the latch protrusion is formed on the second member; the first member as the other member is formed with the latch portion. The stepped section of the one member is formed to have, for instance, a cranked configuration like that of a second aspect of the present invention. However, the stepped section may be an inclined surface inclined denting toward a rear surface side, like the stepped section 106 as shown in Fig. 4, or it may be a vertical surface dented approximately perpendicularly. Thus, various modifications may be employed.

The first member and the second member are abutted with each other in a direction so that the sidewall section of the first member and the upright section of the second member are abutted with each other. For the first member, this direction corresponds to a direction in which the sidewall section abuts to the upright section, and for the second member, this direction corresponds to a direction in which the upright section abuts to the sidewall section. These directions are directed or oriented in opposite directions to each other.

The latch protrusion of the first member protrudes in the abutting direction and is unitarily formed with, for instance, a retaining convex portion like that of a third aspect of the present invention. The retaining convex portion is elastically latched to the latch portion such as a latch hole or the like formed in the other member to prevent the coming-out thereof. However, the latch protrusion may have a distal end, bent or folded in a V-shape configuration or a U-shape configuration, which is latched to the latch portion in non-separating manner. The latch portion may not necessarily be the latch hole but may be a slit, a cutout partly opened to an outside, a recess, a protrusion or a stepped portion with which a latch portion such as the retaining convex portion or the like engages. The latch portion may be elastically deformed to allow engagement of the retaining convex portion of the latch protrusion in the non-separating manner.

The first member and the second member, involving for instance the latch protrusion and the latch portion, may be unitarily made of synthetic resin material. However, the latch protrusion and the latch portion, made of an elastically deforming metal, may be unitarily embedded in the first member and the second member made of synthetic resin by an insert forming i.e. molding. Thus, various modifications may be employed. For the skin member provided depending on needs, various materials may be employed including soft synthetic resin material, woven fabric and nonwoven fabric, etc. Upon forming the first member and the second member by injection molding or the like, the skin material may be preliminarily placed in relevant molding dies to be shaped concurrent with the molding of these members for being unitarily attached. However, after the first member and the second member are formed by injection molding or the like, with applying an adhesive to a surface of the first member and a surface of the second member in separate steps, the skin material is unitarily attached thereto by vacuum forming or press pressure-bonding.

### BRIEF DESCRIPTION OF THE DRAWINGS

Figs. 1A and 1B are views illustrating one embodiment of the present invention applied to a vehicle door trim. Fig. 1A is a perspective view of the vehicle door trim cut away in a strip shape on a plane approximately perpendicular to an outer circumferential edge, and Fig. 1B is a cross section taken on line IB-IB of Fig. 1A.
Fig. 2 is a perspective view showing a state before an ornament member of the vehicle door trim, shown in Fig. 1, is assembled to a door trim body.
Fig. 3 is a view, illustrating another embodiment of the present invention, which is a cross-sectional view corresponding to Fig. 1B.
Fig. 4 is a cross-sectional view showing one example of a conventional connecting structure of a vehicle door trim.

### DETAILED DESCRIPTION OF THE PREFERRED EMBODIMENTS

Now, embodiments of the present invention will be described below in detail with reference to the accompanying drawings.

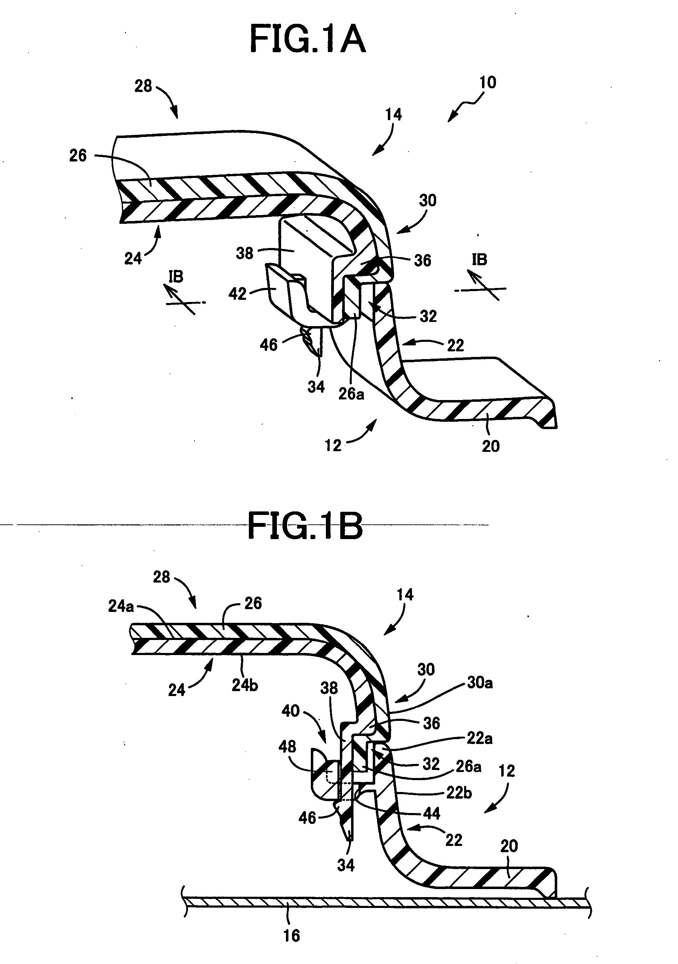

Figs. 1A and 1B are views showing a connecting structure incorporated to an outer peripheral area a vehicle door trim 10 which is a vehicle interior part. Fig. 1A is a perspective view of the vehicle door trim cut away in a strip shape on a plane approximately perpendicular to an outer circumferential edge, and Fig. 1B is a cross-section view taken on line IB-IB in Fig. 1A, that is, a cross-sectional view showing the vehicle door trim cut away at a latch protrusion i.e. latching protrusion 34. In the vehicle door trim 10, an ornament member 14 is assembled unitarily to a door trim body 12. The door trim body 12, made of synthetic resin material with relatively high rigidity, has an outer circumferential flange 20 unitarily fixed to a door panel 16, and a plate-like upright section 22 formed integral with the outer circumferential flange 20. The upright section 22 stands upright from outer circumferential flange 20 at an angle of approximately 90° in a direction away from the door panel 16.

Further, in the ornament member 14, a skin material 26 is unitarily attached to a base member 24 made of synthetic resin with relatively high rigidity. The ornament member 14 further includes a flat section 28 approximately parallel to the door panel 16, and a plate-like sidewall section 30 integrally formed with the flat section 28 at an outer circumferential edge thereof and bent toward the door panel 16 at an angle of approximately 90°. The skin material 26 is made of soft synthetic resin material, and the base member 24 is preliminarily and unitarily formed by injection molding or the like. The base member 24 has a surface 24a to which adhesive is applied to unitarily attach the skin material 26 thereto by vacuum forming or press pressure-bonding. In the present embodiment, the door trim body 12 corresponds to a second member which is the other member, and the ornament member 14 corresponds to a first member which is the one member.

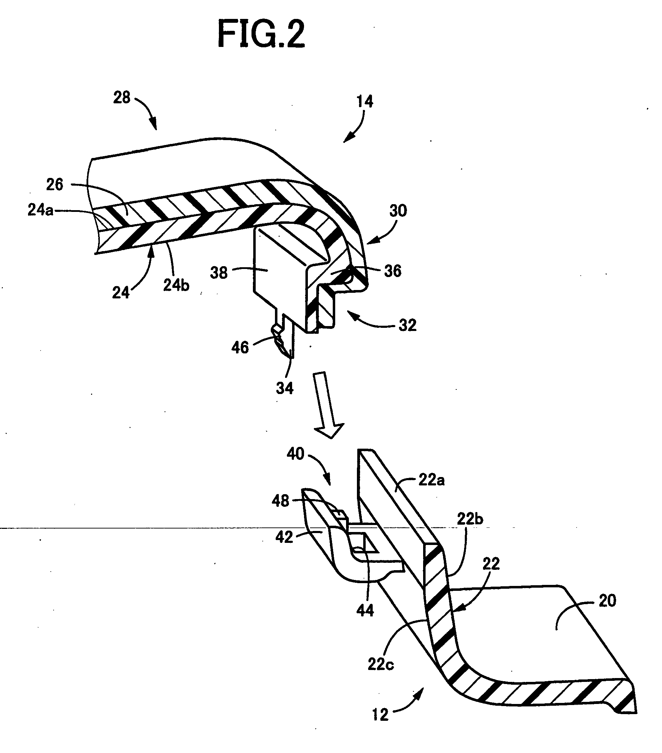

The door trim body 12 and the ornament member 14 are unitarily connected to each other with the upright section 22 and the sidewall section 30 so that a surface 22b of the upright section 22 and a surface 30a of the sidewall section 30 are aligned on a approximately coplanar plane, that is the surfaces 22b and 30a are flushed with each other. Fig. 2 is a perspective view showing a state before the ornament member 14 is assembled to the door trim body 12, with the sidewall 30 having a distal end formed with a stepped section 32 concaved i.e., dented toward a rear surface 24b. The latch protrusion 34 is formed contiguous with the stepped section 32 to protrude in an abutting direction. The abutting direction corresponding to a vertical direction as viewed in Fig. 2, and is directed to a downward direction where the door trim body 12 is located.

The stepped section 32, having a configuration bent in a cranked shape i.e. reversed L-shape in a cross section, has a stepped portion 36 bent toward a rear surface 24b of the base member 24, and an extending portion 38 extending from a distal end of the stepped portion 36 toward the door trim body 12 in the abutting direction, i.e., extending downward as viewed in Fig. 2. The upright section 22 of the door trim body 12 has a distal end 22a held in abutment to the stepped portion 36 via the skin material 26, and the extending portion 38 has a distal end formed with the latch protrusion 34. The latch protrusion 34 can elastically deform in a direction (left-right direction in Figs. 1A and 1B) perpendicular to the protruding direction thereof. In addition, the skin material 26 is attached to the base member 24 along the stepped section 32 in a cranked shape and has an end portion 26a i.e., an end 26a extending to an intermediate position or a proximity to a distal end of the extending portion 38. The end portion 26a of the skin material 26 extends into a positioning recess 40 of the guide section 42 to be explained below.

Meanwhile, the upright section 22 of the door trim body 12 has a rear surface 22c unitarily formed with a guide section 42 with an L-shape configuration in the cross section. The guide section 42 is formed with a positioning recess 40 to which the extending portion 38 is inserted. In addition, the guide section 42 has an area, forming a bottom portion of the positioning recess 40, which is formed with a latch hole 44 as a latched portion to which the latch protrusion 34 is inserted. The latch protrusion 34 is integrally formed with a retaining convex portion 46 on a side surface thereof. As shown by a whitened arrow in Fig. 2, the latch protrusion 34 is inserted to the latch hole 44 at the positioning recess 40, and it elastically deforms to allow the retaining convex portion 46 to pass through the latch hole 44.
Further, as shown in Fig. 1A and 1B, the latch protrusion 34 elastically returns to allow the retaining convex portion 46 to latch to a circumferential edge of the latch hole 44. This prevents the coming-out of the latch protrusion 34 from the latch hole 44 in an upward direction, so that the ornament member 14 is unitarily assembled to the door trim member 12 in non-separating manner. A reinforcing rib 48 is formed on the guide section 42.

In the connecting structure of such a vehicle door trim 10, the stepped section 32 is formed on the ornament member 14, and the latch protrusion 34 is formed contiguous to the stepped section 32 to protrude in the abutting direction Further, the rear surface 22c of the door trim body 12 is provided with the latch hole 44, which allows insertion of the latch protrusion 34 due to the elastic deformation thereof during approaching movement of the door trim body 12 relative to the ornament member 14 in the abutting direction. In addition, due to elastic return of the latch protrusion 34, the retaining convex portion 46 latches to the latch hole 44. Upon assembling the ornament member 14 to the door trim member 12, therefore, the ornament member 14 is sufficiently moved closer to the door trim member 12 in the abutting direction as indicated by the whitened arrow in Fig. 2 for inserting the latch protrusion 34 into the latch hole 44. Thus, the ornament member 14 can be easily and immediately assembled to the door trim body 12.

Further, even when the door trim body 12 and the ornament member 14 have the upright sections 22 and the sidewall sections 30 at the both end portions in the fore and aft direction or at the both end portions in the vertical direction of the vehicle, the both end portions can be unitarily connected to each other by the latch engagement with the upright sections 22 and the sidewall sections 30. This performs the assembling work easily and immediately without worsening a positioning ability, and improves the design freedom such as a configuration design or the like.

In the present embodiment, furthermore, the stepped section 32 formed on the ornament member 14 has the bent configuration with the cranked shape formed in the cross section. The stepped section 32 includes the stepped portion 36 bent toward the rear surface 24b, and the extending portion 38 extending from the distal end of the stepped portion 36 in the abutting direction. Moreover, since the skin material 26 fixedly attached to the surface 24a of the ornament member 14, has the end portion 26a extending to the intermediate position of the extending portion 38, the end portion 26a does not need to be processed in rolling treatment or edge-tucking treatment. In addition, the skin material 26 can be reliably prevented from pealing up when the distal end 22a of the upright section 22 forming the door trim body 12 is brought into abutting engagement with the skin material 26 of the stepped portion 36. This can render the vehicle door trim 10 having the high design character like the streamer at low cost.

In the preset embodiment, besides, the guide section 42 is integrally formed with the upright section 22 of the door trim body 12 on the rear surface 22c thereof to allow the extending portion 38 to be inserted to the positioning recess 40 formed therein. This enables the sidewall section 30 of the ornament member 14 and the upright section 22 of the door trim body 12 to be assembled with increased positional precision in abutting engagement with each other. In addition, the latch protrusion 34 is inserted to the latch hole 44 formed in the guide section 42, so that the retaining convex portion 46 formed on the latch protrusion 34 is elastically latched to the circumferential edge of the latch hole 44. This favorably prevents the coming-out of the latch protrusion 34 from the latch hole 44, causing the ornament member 14 to be unitarily assembled to the door trim body 12 in non-separating manner.

In the preset embodiment, further, the skin material 26 is fixedly attached to the surface of the ornament member 14 such that the end portion 26a extends to the intermediate position of the extending portion 38. However, the end portion 26a of the skin material 26 does not need to extend to the intermediate position of the extending portion 38, but may extend to a rear surface side of the distal end 22a of the upright section 22 of the door trim body 12 along at least the stepped portion 36. This achieves a further reduction in a surface area of the skin material 26 than that of the present embodiment, resulting in an increased yield of the skin material 26 with a reduce production cost of the vehicle door trim 10 to a lower level.

In the present embodiment set forth above, further, the latch protrusion 34 is formed on the ornament member 14 and the door trim body 12 is formed with the latch hole 44 serving as the latch portion. As shown in Fig. 3, however, the upright section 22 of the door trim body 12 may have a stepped section 60 and a latch protrusion 62. The stepped section 60 is formed at the distal end of the upright section 22 to be bent toward the rear surface 22c in a cranked shape i.e. L-shape. At the distal end of the stepped section 60, a latch protrusion 62 is formed to protrude toward the ornament member 14 in an abutting direction, i.e., protruding upward as viewed in Fig. 3. In addition, the sidewall section 30 of the ornament member 14 may have, on the rear surface 24b of the base member 24, a flange 64 protruding in approximately parallel to the flat section 28 formed with a latch hole 66 as a latch portion. The latch hole 66 allows a retaining convex portion 68 formed on the latch protrusion 62 to elastically latch thereto. In this case, the door trim body 12 corresponds to one member and the ornament member 14 corresponds to the other member.

In the structure shown in Fig. 3, furthermore, the sidewall section 30 of the ornament member 14 may have, at a distal end thereof, a second stepped section 70 integrally formed to be bent toward the rear surface 24b at an approximately right angle i.e. reversed L-shape. A second stepped portion 71 formed on the second stepped section 70 is brought into abutting engagement with a stepped portion 61 formed on the stepped section 60 via the skin material 26. Moreover, the second stepped section 70 is continuously formed with a positioning protrusion 74 protruding in a direction opposite to the latch protrusion 62. In addition, the stepped portion 61 of the stepped section 60 is formed with a latch hole 76 to which the positioning protrusion 74 is inserted when the stepped portion 61 and the positioning protrusion 74 are moved closer relative to each other in the abutting direction. Thus, the positioning protrusion 74 and the latch hole 76 are brought into latching engagement with each other. This provides, with the latching engagement of the latch protrusion 62 with the latch hole 66, an effect that the sidewall section 30 of the ornament member 14 and the upright section 22 of the door trim body 12 are assembled to each other to be abutted with increased positional precision.

## Claims

1. A connecting structure for a vehicle interior part (10) to allow a plate-like sidewall section (30) disposed on at least one end of a first member (1a) and a plate-like upright section (22) disposed on at least one end of a second member (12) to be brought into abutted engagement such that a surface (30a) of the plate-like sidewall section and a surface (22b) of plate-like upright section are approximately coplanar to be unitarily connected to each other,
wherein one member (14; 12) of the first member and the second member has, on an abutting portion thereof, a stepped section (32; 60) dented to a rear surface (24b; 22c) side, and a latch protrusion (34; 62) contiguous with the stepped section and protruding in an abutting direction during the abutting engagement toward the other member (12; 14) of the first member and the second member; and
the other member (12; 14) of the first member and the second member has, on a rear surface side thereof a latch portion (44; 66) with which the latch protrusion (34; 62) elastically engages, when the one member (14; 12) and the other member (12; 14) are moved closer relative to each other in the abutting direction, to unitarily connect the one member (14; 12) and the other member (12; 14) with preventing the latch protrusion (34; 62) from coming out,
**characterized in that**:
the one member (14) formed with the stepped section (32) has a surface (24a) to which a skin material (26) is fixedly attached, and the skin material has an end portion (26) extending along the stepped section (32) to reach a rear surface (22c) side of the other member (12).

2. The connecting structure for the vehicle interior part according to claim 1, wherein the stepped section (32) has a bent shape formed in a cranked configuration in a cross section, and includes a stepped portion (36) bent toward a rear surface (24b) side, and an extending portion (38) extending from a distal end of the stepped portion toward the other member (12) in the abutting direction the other member (12) being brought into abutment with the stepped portion (36), and the extending portion (38) having a distal end formed with the latch protrusion (34).

3. The connecting structure for the vehicle interior part according to claim 2, wherein the other member (12) has, on the rear surface (22c) thereof, a guide section (42) having an L-shape in cross section to form a positioning recess (40) to allow insertion of the extending portion, the guide section (42) having, on an area forming a bottom portion of the positioning recess (40), a latch hole (44) as the latch portion to allow insertion of the latch protrusion; and wherein the latch protrusion (34) has a retaining convex portion (46) passing through the latch hole (44) due to an elastic deformation of the latch protrusion, the retaining convex portion (a6) being elastically returned to engage with a circumferential edge of the latch hole for preventing the latch protrusion from coming out.

4. The connecting structure for the vehicle interior part according to claim 1, wherein the other member (14) has, on an abutting portion thereof, a second stepped section (70) bent toward the rear surface (24b) side of the other member (14), and a positioning protrusion (74) contiguous with the second stepped section and protruding in a direction opposite to the latch protrusion (62); and
wherein the one member (12) has, on the stepped section (60) thereof an engagement hole (76) with which the positioning protrusion (74) engages when the one member (12) is moved closer relative to the other member (14) in the abutting direction.

5. The connecting structure for the vehicle interior part according to claim 3, wherein the latch protrusion (34) can elastically deform perpendicular to a protruding direction thereof, and the retaining convex portion (46) is formed at side surface of the latch protrusion (34).

6. The connecting structure for the vehicle interior part according to claim 3, wherein the end portion (26a) of the skin material (26) is inserted into positioning recess (40) of the guide section (42).

7. The connecting structure for the vehicle interior part according to claim 4, wherein a second stepped portion (71) is formed on the second stepped section (70) and a stepped portion (61) is formed on the stepped section (60) so that the second stepped portion and the stepped portion are abutted to each other.

## Patentansprüche

1. Verbindungsanordnung für ein Fahrzeuginnenteil (10) um einem plattenartigen Seitenwandabschnitt (30), der an wenigstens einem Ende eines ersten Bauteils (1a) angeordnet ist, und einem plattenartigen aufrechten Abschnitt (22), der an wenigstens einem Ende eines zweiten Bauteils (22) angeordnet ist, zu ermöglichen, in anliegenden Eingriff gebracht zu werden, so dass eine Fläche (30a) des plattenartigen Seitenwandabschnitts und eine Fläche (22b) des plattenartigen aufrechten Abschnitts in etwa koplanar sind, um einheitlich miteinander verbunden zu werden,
wobei ein Bauteil (14; 12) von dem ersten Bauteil und von dem zweiten Bauteil an einem Anlageabschnitt von diesem einen gestuften Abschnitt (32; 66), der zu einer Seite einer Rückfläche (24b; 22c) eingedrückt ist, und einen Sperrvorsprung (34; 62) aufweist, der benachbart zu dem gestuften Abschnitt ist und während des anliegenden Eingriffs zu dem anderen Bauteil (12; 14) von dem ersten Bauteil und dem zweiten Bauteil in einer Anlagerichtung vorragt; und
das andere Bauteil (12; 14) von dem ersten Bauteil und dem zweiten Bauteil an einer Rückflächenseite von diesem einen Sperrabschnitt (44; 66) aufweist, mit dem der Sperrvorsprung (34; 62) elastisch in Eingriff steht, wenn das eine Bauteil (14; 12) und das andere Bauteil (12; 14) in der Anlagerichtung relativ aufeinander zu bewegt werden, um das eine Bauteil (14; 12) und das andere Bauteil (12; 14) einheitlich zu verbinden, wobei der Sperrvorsprung (34; 62) an einem Herauskommen gehindert ist,
**dadurch gekennzeichnet, dass**:
das eine Bauteil (14), das mit dem gestuften Abschnitt (32) ausgebildet ist, eine Fläche (24a) aufweist, an der ein Oberflächenmaterial (26) fest befestigt ist, und das Oberflächenmaterial einen Endabschnitt (26) aufweist, der sich entlang des gestuften Abschnitts (32) erstreckt, um eine Seite der Rückfläche (22c) des anderen Bauteils (12) zu erreichen.

2. Verbindungsanordnung für das Fahrzeuginnenteil nach Anspruch 1, wobei der gestufte Abschnitt (32) eine gebogene Form aufweist, die im Querschnitt in einer gekröpften Gestalt ausgebildet ist, und einen gekröpften Abschnitt (36), der zu einer Seite der Rückfläche (24b) hin gebogen ist, und einen Erstreckungsabschnitt (38) aufweist, der sich von einem distalen Ende des gekröpften Abschnitts zu dem anderen Bauteil (12) in der Anlagerichtung des anderen Bauteils (12) hin erstreckt, das in Anlage mit dem gekröpften Abschnitt (36) gebracht wird, und wobei der Erstreckungsabschnitt (38) ein distales Ende aufweist, das mit dem Sperrvorsprung (34) ausgebildet ist.

3. Verbindungsanordnung für das Fahrzeuginnenteil nach Anspruch 2, wobei das andere Bauteil (12) an dessen Rückfläche (22c) einen Führungsabschnitt (42) aufweist, der eine L-Form im Querschnitt aufweist, um einen Positionierungsausschnitt (40) auszubilden, um einen Einsatz des Erstreckungsabschnitts zu ermöglichen, wobei der Führungsabschnitt (42) an einem Bereich, der den Bodenabschnitt des Positionierungsausschnitts (40) ausbildet, ein Sperrloch (44) als den Sperrabschnitt aufweist, um einen Einsatz des Sperrvorsprungs zu ermöglichen; und wobei der Sperrvorsprung (34) einen konvexen Halteabschnitt (46) aufweist, der aufgrund einer elastischen Deformation des Sperrvorsprungs durch das Sperrloch (44) hindurchführt, wobei der konvexe Halteabschnitt (46) elastisch zurückspringt, um mit einem Umfangsrand des Sperrlochs in Eingriff zu stehen, um den Sperrvorsprung an einem Herauskommen zu hindern.

4. Verbindungsanordnung für ein Fahrzeuginnenteil nach Anspruch 1, wobei das andere Bauteil (14) an dessen Anlageabschnitt einen zweiten gekröpften Abschnitt (70), der zu der Seite der Rückfläche (24b) des anderen Bauteils (14) hingebogen ist, und einen Positionierungsvorsprung (74) aufweist, der zu dem zweiten gekröpften Abschnitt benachbart ist und in eine Richtung entgegen dem Sperrvorsprung (62) vorragt; und
wobei das eine Bauteil (12) an dem gekröpften Abschnitt (60) von diesem ein Eingriffsloch (76) aufweist, mit dem der Positionierungsvorsprung (74) in Eingriff steht, wenn das eine Bauteil (12) sich relativ zu dem anderen Bauteil (14) in der Anlagerichtung nähert.

5. Verbindungsanordnung für das Fahrzeuginnenteil nach Anspruch 3, wobei der Sperrvorsprung (34) sich senkrecht zu dessen Vorsprungsrichtung elastisch deformieren kann und der konvexe Halteabschnitt (46) an einer Seitenfläche des Sperrvorsprungs (34) ausgebildet ist.

6. Verbindungsanordnung für das Fahrzeuginnenteil nach Anspruch 3, wobei der Endabschnitt (26a) des Oberflächenmaterials (26) in den Positionierungsausschnitt (40) des Führungsabschnitts (42) eingesetzt ist.

7. Verbindungsanordnung für das Fahrzeuginnenteil nach Anspruch 4, wobei ein zweiter gestufter Abschnitt (71) an dem zweiten gekröpften Abschnitt (70) ausgebildet ist und ein gestufter Abschnitt (61) an dem gekröpften Abschnitt (60) derart ausgebildet ist, dass der zweite gestufte Abschnitt und der gestufte Abschnitt aneinander anliegen.

## Revendications

1. Structure de liaison pour une partie intérieure (10) d'un véhicule pour permettre à un tronçon de paroi latérale (30) en forme de plaque disposé sur au moins une extrémité d'un premier élément (1a) et à un tronçon droit (22) en forme de plaque disposé sur au moins une extrémité d'un deuxième élément (12) d'être disposés dans un engagement en about de sorte qu'une surface (30a) du tronçon de paroi latérale en forme de plaque et qu'une surface (22b) du tronçon droit en forme de plaque soient approximativement dans le même plan pour être connectées de manière unitaire l'une à l'autre,
dans laquelle un élément (14 ; 12) du premier élément et du deuxième élément a, sur une partie d'aboutement correspondante, un tronçon étagé (32 ; 60) en creux côté surface arrière (24b; 22c), et une protubérance de verrouillage (34 ; 62) contiguë avec le tronçon étagé et faisant saillie dans une direction d'aboutement durant l'engagement en about vers l'autre élément (12 ; 14) du premier élément et du deuxième élément ; et
l'autre élément (12 ; 14) du premier élément et du deuxième élément a, sur un côté de surface arrière correspondante une partie de verrouillage (44 ; 66) avec laquelle la protubérance de verrouillage (34 ; 62) s'engage de manière élastique, lorsque l'élément (14 ; 12) et l'autre élément (12 ; 14) sont rapprochés l'un par rapport à l'autre dans la direction d'aboutement, pour connecter de manière unitaire l'élément (14 ; 12) et l'autre élément (12 ; 14) en empêchant la protubérance de verrouillage (34, 62) de se désengager,
**caractérisé en ce que**
l'élément (14) formé avec le tronçon étagé (32) a une surface (24a) à laquelle un matériau de gainage (26) est fermement attaché, et le matériau de gainage a une partie d'extrémité (26) s'étendant le long du tronçon étagé (32) pour atteindre un côté de surface arrière (22c) de l'autre élément (12).

2. Structure de liaison pour une partie intérieure d'un véhicule selon la revendication 1, dans laquelle le tronçon étagé (32) a une forme fléchie conformée selon une configuration coudée en coupe transversale, et comporte une partie étagée (36) fléchie vers un côté de surface arrière (24b), et une partie en extension (38) s'étendant d'une extrémité distale de la partie étagée vers l'autre élément (12) dans une direction d'aboutement, l'autre élément (12) étant placé en aboutement avec la partie étagée (36), et la partie en extension (38) ayant une extrémité distale formée avec la protubérance de verrouillage (34).

3. Structure de liaison pour une partie intérieure d'un véhicule selon la revendication 2, dans laquelle l'autre élément (12) a, sur sa surface arrière (22c), un tronçon de guidage (42) ayant une forme de L en coupe transversale pour former un évidement de positionnement (40) pour permettre l'insertion de la partie en extension, le tronçon de guidage (42) ayant, sur une région formant une partie de fond de l'évidement de positionnement (40), un trou de verrouillage (44) faisant office de partie de verrouillage pour permettre l'insertion de la protubérance de verrouillage ; et où la protubérance de verrouillage (34) a une partie (46) convexe de retenue passant à travers le trou de verrouillage (44) grâce à une déformation élastique de la protubérance de verrouillage, la partie (a6) convexe de retenue étant ramenée de manière élastique pour s'engager avec un bord circonférentiel du trou de verrouillage pour empêcher la protubérance de verrouillage de se désengager.

4. Structure de liaison pour une partie intérieure d'un véhicule selon la revendication 1, dans laquelle l'autre élément (14) a, sur une partie d'aboutement correspondante, un deuxième tronçon étagé (70) fléchi vers le côté de surface arrière (24b) de l'autre élément (14), et une protubérance de positionnement (74) contiguë avec le deuxième tronçon étagé et faisant saillie dans une direction opposée à la protubérance de verrouillage (62) ; et
dans laquelle l'un élément (12) a, sur son tronçon étagé (60) un trou d'engagement (76) avec lequel la protubérance de positionnement (74) s'engage lorsque l'élément (12) se rapproche de l'autre élément (14) dans la direction d'aboutement.

5. Structure de liaison pour une partie intérieure d'un véhicule selon la revendication 3, dans laquelle la protubérance de verrouillage (34) peut se déformer de manière élastique perpendiculairement à sa direction de protubérance, et la partie (46) convexe de retenue est formée au niveau de la surface latérale de la protubérance de verrouillage (34).

6. Structure de liaison pour une partie intérieure d'un véhicule selon la revendication 3, dans laquelle la partie d'extrémité (26a) du matériau de gainage (26) est insérée dans un évidement de positionnement (40) du tronçon de guidage (42).

7. Structure de liaison pour une partie intérieure d'un véhicule selon la revendication 4, dans laquelle une deuxième partie étagée (71) est formée sur le deuxième tronçon étagé (70) et une partie étagée (61) est formée sur le tronçon étagé (60) de sorte que la deuxième partie étagée et la partie étagée soient contiguës l'une par rapport à l'autre.
